(19) Europäisches Patentamt
European Patent Office
Office européen des brevets

(11) **EP 0 733 442 B1**

(12) **EUROPÄISCHE PATENTSCHRIFT**

(45) Veröffentlichungstag und Bekanntmachung des Hinweises auf die Patenterteilung:
05.11.1997 **Patentblatt 1997/45**

(51) Int. Cl.⁶: **B25D 16/00**, B25D 17/00

(21) Anmeldenummer: 95810805.2

(22) Anmeldetag: **19.12.1995**

(54) **Hammerbohrgerät für Eisenbeton**

Percussion drilling machine for reinforced concrete

Marteau perforateur pour béton armé

(84) Benannte Vertragsstaaten:
**AT CH DE DK ES FR GB IT LI NL SE**

(30) Priorität: **24.03.1995 DE 19510964**

(43) Veröffentlichungstag der Anmeldung:
**25.09.1996 Patentblatt 1996/39**

(73) Patentinhaber: **HILTI Aktiengesellschaft**
**9494 Schaan (LI)**

(72) Erfinder:
- **Stöck, Maximilian**
  **CH-9478 Azmoos (CH)**
- **Schulz, Reinhard**
  **D-81375 München (DE)**
- **Kaibach, Werner**
  **D-86807 Buchloe (DE)**
- **Bongers-Ambrosius, Hans-Werner**
  **D-82393 Iffeldorf (DE)**
- **Ludwig, Ralf**
  **CH-9466 Sennwald (CH)**
- **Schweizer, Edwin**
  **CH-9475 Sevelen (CH)**
- **Schad, Hanspeter**
  **CH-9472 Grabs (CH)**

(74) Vertreter: **Wildi, Roland et al**
**Hilti Aktiengesellschaft**
**Patentabteilung**
**9494 Schaan (LI)**

(56) Entgegenhaltungen:
**DE-A- 2 834 991          DE-A- 3 120 834**
**DE-A- 3 637 354          GB-A- 2 166 075**

**Beschreibung**

Die Erfindung betrifft ein Handgerät zur abtragenden Bearbeitung von spröden und/oder duktil versagenden Materialien gemäss dem Oberbegriff des Patentanspruchs 1.

In der Bauindustrie, im Installations- und Elekrogewerbe usw. ist es vielfach nötig Baustoffe wie Beton mit oder ohne Armierungseisen und andere Baustoffe materialabtragend zu bearbeiten. Auf diese Weise werden Bohrungen beispielsweise für das Anbringen von Befestigungselementen, Durchbrüche oder Kanäle für Leitungen, Vertiefungen für das Anbringen von Steckerdosen u.v.a.m. erstellt. Bevorzugt werden für diese Arbeiten Handgeräte in Verbindung mit geeigneten Werkzeugen eingesetzt. Für das Erstellen von Bohrungen in mineralischem Untergrund wie Beton, Gestein und Mauerwerk haben sich sogenannte Hammerbohrgeräte bewährt. Hammerbohrgeräte weisen eine kontinuierlich angetriebene Werkzeugaufnahme und einen motorisch betätigbaren Schlagmechanismus auf. Im Betrieb wie auf ein in die Werkzeugaufnahme eingespanntes, kontinuierlich rotierendes Werkzeug ein schlagartiger Impuls übertragen, der die Bearbeitung des Untergrundes unterstützt. Bei den bekannten Hammerbohrgeräten grosser Abbauleistung ist der Schlagmechanismus ein elektropneumatisches Schlagwerk, welches auf das Werkzeug longitudinale Stösse überträgt. Ein derartiges Hammerbohrgerät ist beispielsweise in der DE-A-3 120 834 beschrieben.

Diese bekannten Hammerbohrgeräte zeigen in min mineralischen Untergründen wie Mauerwerk, Gestein und Beton sehr gute Abbaueingenschaften und erweisen sich im trockenen Handeinsatz als sehr effizient. Beim Abbau von armiertem Beton kann diese Effizienz aber insbesondere bei Armierungstreffern stark beeinträchtigt werden. Beim Hammerbohren von Armierungen wird der Armierungsstahl durch den longitudinalen Schlag auf das Werkzeug primär verformt und kaltverfestigt, wodurch die Abbauleistung stark reduziert wird. Daher ist es im Fall von Armierungstreffern vielfach erforderlich, den begonnenen Bohrvorgang abzubrechen und an anderer Stelle des armierten Betonuntergrunds eine neue Bohrung zu versuchen. Dieser Vorgang ist unbefriedigend und führt zu grossen Zeitverlusten. Armierungstreffer treten beim Bohren von armiertem Beton überraschend auf und können den Benutzer des Hammerbohrgerätes unvorbereitet treffen. Dies kann aufgrund der plötzlich auftretenden Drehmomentspitzen zu gefährlichen Situationen führen.

Es besteht daher der Wunsch, ein Handgerät zur materialabtragenden Bearbeitung von mineralischen Untergründen und armierten Untergründen, insbesondere amierten Beton, zu schaffen, weiches von Hand vorzugsweise im Trockeneinsatz anwendbar ist und mit dem der Untergrund effizient bearbeitet werden kann. Das Bohrgerät soll eine erhöhte Sicherheit für den Anwender bieten, insbesondere sollen Armierungstreffer zu keinen gefährlichen Drehmomentspitzen führen.

Die Lösung dieser Aufgaben besteht in einem Handgerät zur abtragenden Bearbeitung von spröden und/oder duktil versagenden Materialien, welches die im kennzeichnenden Abschnitt des Patentanspruchs 1 angeführten Merkmale aufweist. Gemäss der Erfindung sind Mittel vorgesehen, mit welchen impulsartige Drillschläge erzeugbar sind, wobei eine longitudinale Schlagkomponente und eine Torsionsschlagkomponente zu einem Drillschlag überlagert sind, der auf das In der Werkzeugaufnahme eingespannte kontinuierlich rotierende Werkzeug übertragbar ist, und eine der Schlagkomponenten vom Schlagmechanismus geliefert wird.

Durch die Überlagerung von longitudinaler Schlagkomponente und Torsionsschlagkomponete wird die Richtung da Kraftvektors an der am zu bearbeitenden Untergrund angreifenden Schneide des Werkzeugs beispielsweise gegenüber einem Hammerbohrgerät mit longitudinaler Schlagunterstützung aus der axialen Richtung des Werkzeugs gedreht. Durch die geänderte Richtung des Kraftvektors wird bei Armierungstreffern der Armierungsstahl durch Scherung abgebaut. Dadurch können plötzlich auftretende Drehmomentspitzen bei Festsitz des Werkzeugs vermieden werden und kann die Sicherheit für den Anwender des Handggerätes erhöht werden. Aber auch bei mineralischen Untergründen ohne Armierung unterstützt die Scherwirkung des Drillschlages den Abbauprozess. Durch das energetisch günstigere Abbauverfahren ist die Wärmeentwicklung reduziert, weshalb auch bei Bohrungen grösseren Durchmessers in besonders harten Untergründen auf eine zusätzliche Kühlung verzichtet werden kann. Die erfindungsgemässe Ausbildung des Handgeräts zur abtragenden Bearbeitung von spöde und/oder duktil versagenden Materialien erlaubt daher auch in derartigen Anwendungen einen Trockeneinsatz.

Die longitudinale Stosswelle und die Welle des Torsionsstosses breiten sich im Werkzeug mit unterschiedlichen Geschwindigkeiten aus. Bei Werkzeugen kurzer Baulänge, beispielsweise unter 300 mm, wirken sich die unterschiedlichen Ausbreitungsgeschwindigkeiten kaum aus. Die beiden Wellen kommen weitgehend simultan an der Werkzeugspitze an. Bei längeren Werkzeugen können die unterschiedlichen Ausbreitungsgeschwindigkeiten gezielt ausgenützt werden. In diesem Fall dringt die Werkzeugspitze zunächst durch den Longitudinalstoss in den Untergrund ein und baut diesen dann durch die nachlaufende Torsionswelle durch Scherung ab. Die Richtung des Kraftvektors an der Schneide des Werkzeugs ist vom Radius des Werkzeugs abhängig. In der Mitte der Schneide wirkt die Kraft unabhängig vom Anteil des Torsionsstosses immer in Richtung der Werkzeugachse. Abhängig vom Anteil der Torsionsschlagkomponente neigt sich die Richtung des Kraftvektors an der Schneide mit zunehmendem Radius. Das erfindungsgemässe Handgerät kann auch derartig modifiziert sein, dass die Mittel zur Erzeugung des Drillschlags die beiden Schlagkomponenten gezielt derart erzeugen, dass sie auch bei kurzen Werkzeuglängen zeitlich versetzt ankommen bzw. auch bei grossen Baulängen des Werkzeugs im wesentlichen simultan an der Werkzeugspitze ankommen.

Der Drillschlag weist eine Gesamtstossenergie auf, welche sich aus einer Drehstossenergie der Torsionsschlagkomponente und aus einer Longitudinalstossenergie der longitudinalen Schlagkomponente zusammensetzt. Dabei gilt vorzugsweise

$$0,02 < E_t/E_l \cdot D < 0,5,$$

wobei $E_t$ für die Drehstossenergie und $E_l$ für die Longitudinalstossenergie steht und D, gemessen in mm, den Durchmesser des in die Werkzeugaufnahme eingespannten Werkzeugs (9) bezeichnet. Innerhalb des bevorzugten Bereichs des Verhältnisses der Schlagenergien der beiden Schlagkomponenten ist ein gutes longitudinales Eindringen der Werkzeugspitze in den Untergrund und ein ausreichender Abbau durch Scherung gewährleistet.

In einer bevorzugten Ausführungsvariante des erfindungsgemässen Handgeräts ist der motorisch betätigbare Schlagmechanismus zur Erzeugung von Longitudinalschlägen ausgebildet und wird mit Hilfe der Mittel zur Erzeugung von Drillschlägen die Torsionsschlagkomponente durch vorzugsweise mechanische Umwandlung eines Teils der Stossenergie der Longitudinalschläge erzeugt. Auf diese Weise können beispielsweise die Erfahrungen der bekannten Hammerbohrgeräte mit longitudinaler Schlagunterstützung genutzt werden. Der vorzugsweise von einem elektropneumatischen Schlagwerk erzeugte Longitudinalschlag wird unter Ausnutzung bekannter physikalischer Prinzipe in einen Drillschlag umgewandelt. Insbesondere können dabei die Effekte von Keil, Hebel, Druckfortpflanzung, elastischer Schubverformung oder auch Querkontraktion zur Erzeugung der zweiten Schlagkomponente genutzt werden.

Dabei ist es vorteilhaft, wenn bei Hammerbohrgeräten mit einem Schlagmechanismus zur Erzeugung von Longitudinalschlägen die Mittel zu Erzeugung der Drillschläge miteinander zusammenwirkende Kulissen und/oder Mitnahmeflächen umfassen, mit denen ein Teil des Impulses der Longitudinalschläge in ein Drehmoment umwandelbar ist, welches als Torsionsschlagkomponente den Longitudinalschlägen überlagerbar ist. Wie bereits zuvor angedeutet, hängt die Richtung der Drehung des Kraftvektors an der Spitze des Werkzeugs vom relativen Anteil der beiden Schlagkomponenten ab.

Die Mittel zur Erzeugung der Drillschläge sind bevorzugt innerhalb des Gerätegehäuses angeordnet. Dabei können sie bei Geräten mit elektropneumatischem Schlagwerk zur Erzeugung von Longitudinalschlägen zwischen dem Flugkolben und dem Döpper oder zwischen dem Döpper und dem Einsteckende des Werkzeugs angeordnet sein.

In einer besonders interessanten Ausführungsvariante der Erfindung ist das Hammerbohrgerät mit einem Schlagmechanismus zur Erzeugung von Longitudinalschlägen ausgestattet, und sind die Mittel zur Erzeugung von Drillschlägen zwischen dem Schlagmechanismus und der Werkzeugaufnahme angeordnet und umfassen einen im Feld eines Stators mit regelbarer Umdrehungsgeschwindigkeit rotierbaren Rotor. Der Rotor ersetzt den konventionellen Döpper bei den bekannten Hammerbohrgeräten. Der Rotor wird vom Flugkolben des Schlagmechanismus mit longitudinalen Schlägen beaufschlagt. Beim Stoss durch den Flugkolben wird der Rotor mit grosser Kraft gegen das Einsteckende des Werkzeugs gepresst und dort durch geeignete Ausbildung der Kontaktflächen mit hoher Reibung stossartig blockiert. Auf diese Weise entsteht am Einsteckende gleichzeitig zur longitudinalen Stosswelle eine Torsionswelle, die beide auf das Werkzeug übertragen werden. Über die Drehzahl des Rotors ist der Anteil der Torsionsschlagkomponente am Drillschlag regelbar und auf diese Weise die Richtung des Kraftvektors an der Werkzeugspitze kontrollierbar.

In einer weiteren bevorzugten Modifikation des erfindungsgemässen Hammerbohrgerätes mit Longitudinalsschlagwerk werden die Drillschläge direkt im Antriebsmotor für die Werkzeugaufnahme erzeugt. Dazu umfassen die Mittel zur Erzeugung von Drillschlägen einen Regelmechanismus, mit dem der kontinuierlichen Rotation der Werkzeugaufnahme Drehmomentspitzen überlagerbar sind. In einer bevorzugten Ausführungsvariante sind auch Sensoren vorgesehen, mit denen die Übertragung von Longitudinalschlägen an das Werkzeug überwachbar ist und der Regelmechanismus derart steuerbar ist, dass die Drehmomentspitzen immer jeweils dann überlagert werden, wenn ein Longitudinalschlag an das Werkzeug übertragen wird.

Im folgenden wird die Erfindung unter Bezugnahme auf die schematischen Darstellungen anhand von Ausführungsbeispielen näher erläutert. Die Darstellungen beschränken sich dabei auf die für das Verständnis der Erfindung wesentlichen Details. Es zeigen:

Fig. 1    einen Ausschnitt eines ersten Ausführungsbeispiels der Erfindung in teilweise explodierter Darstellung;

Fig. 2    einen Adapter in teilweise explodierter Darstellung;

Fig. 3    ein Ausschnitt eines dritten Ausführungsbeispiels der Erfindung; und

Fig. 4    ein weiteres Ausführungsbeispiel der Erfindung.

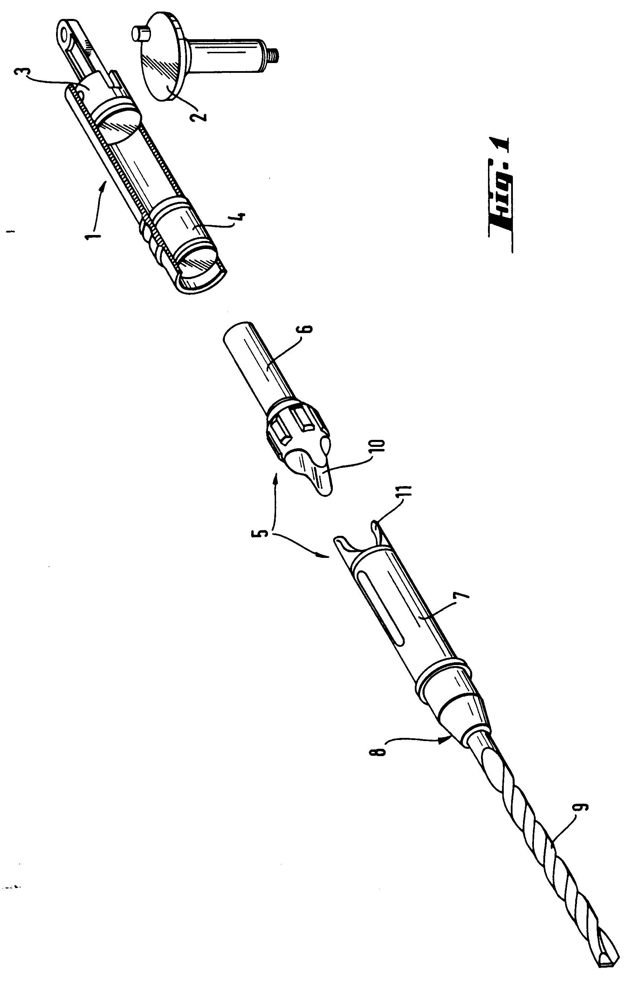

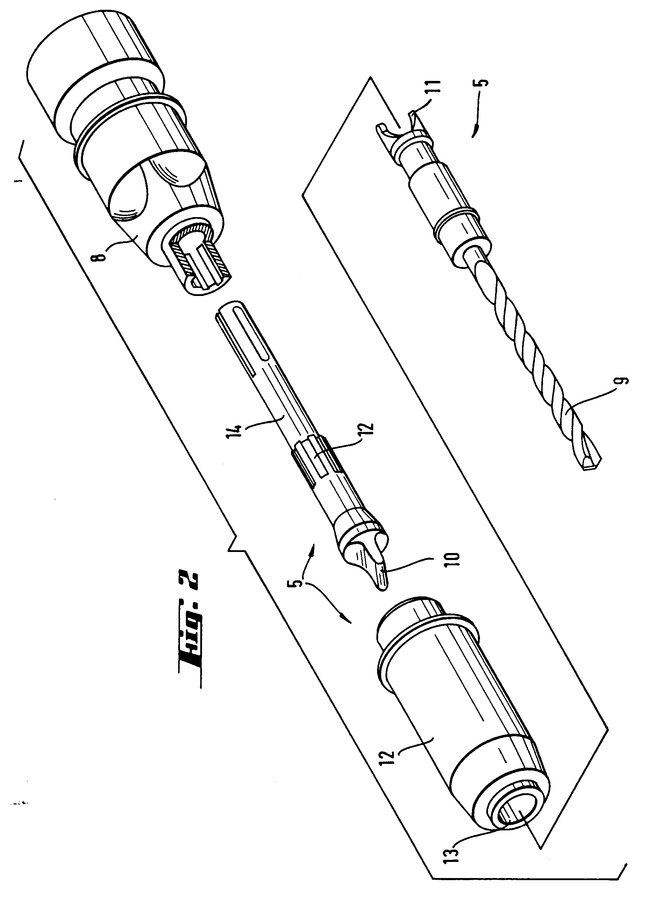

Die in den Fig. 1-3 ausschnittsweise dargestellten Ausführungsbeispiele des erfindungsgemäss ausgebildeten Hammerbohrgerätes weisen jeweils einen motorisch betätigbaren Schlagmechanismus 1 zur Erzeugung von impulsartigen longitudinalen Schlägen auf. Der Schlagmechanismus 1 wird durch ein elektropneumatisches Schlagwerk gebildet und ist beispielsweise Bestandteil der Hammerbohrgerätegeneration der Anmelderin, die beispielsweise im Produktekatalog der Anmelderin, Systemlösungen für den Bau 1994/95, Seiten 56-75 beschrieben sind. Der Schlagmechanismus 1 umfasst gemäss Fig. 1 eine motorisch angetriebene Exzenterscheibe 2, die mit der Pleuelstange eines Erregerkolbens 3 verbunden ist, der periodisch in einer zylindrischen Kolbenführung in Axialrichtung eines Werkzeugs 9 vor und zurück bewegbar ist. Durch die periodische axiale Bewegung des Erregerkolbens 3 wird ein innerhalb der Kolbenführung angeordneter Flugkolben 4 beschleunigt, der in axialer Richtung auf das rückwärtige Ende eines Döppers 6 schlägt. Auf diese Weise wird die Bewegungsenergie des Flugkolbens 4 als longitudinaler Impuls an den Döpper 6 übertragen. Zwischen dem Erregerkolben 3 und dem Flugkolben 4 befindet sich ein Luftpolster, welches verhindert, dass der zurückfliegende Flugkolben 4 gegen den Erregerkolben 3 stösst. Der Antriebsmotor für den Erregerkolben 3 stellt zugleich den Antrieb für eine Werkzeugaufnahme 8 (Fig. 2) dar. Ein in die Werkzeugaufnahme 8 eingespanntes Werkzeug 9, beispielsweise ein mit Wendein versehener Gesteinsbohrer, wird mit Hilfe des Antriebsmotors kontinuierlich um seine Längsachse rotiert. Der Döpper 6 überträgt den longitudinalen Schlag an das in die Werkzeugaufnahme 8 eingespannte Werkzeug 9.

In axialer Verlängerung des Schlagmechanismus 1 sind Mittel 5 angeordnet, mit deren Hilfe der vom Flugkolben 4 auf den Döpper 6 übertragene Longitudinalschlag in einen Drillschlag umgeformt wird. Dieser Drillschlag setzt sich aus einer Longitudinalschlagkomponente und einer Torsionsschlagkomponente zusammen. Die Torsiosschlagkomponente wird aus der Longitudinalschlagkomponente erzeugt, indem ein Teil der Stossenergie des Longitudinalschlags in einen Drehstoss umgewandelt wird. Dies erfolgt bevorzugt auf mechanische Weise, indem das Vorderende des Döppers 6 und das rückwärtige Ende des mit dem Werkzeug 9 verbundenen Bauteils 7 mit zusammenwirkenden Kulissen 10, 11 und/oder Mitnahmeflächen ausgestattet sind. Die zusammenwirkenden Kulissen 10, 11 gleiten aneinander nach dem Keilprinzip ab und formen einen Teil der Stossenergie des Longitudinalschlags in einen Drehstoss um. Der Anteil der umgeformten Stossenergie des Longitudinalsschlags hängt dabei von der Neigung der miteinander zusammenwirkenden Flächen ab.

In einer zu den Kulissen äquivalenten Ausführungsvariante der Kraftumlenkung kann auch ein Hebelpaar vorgesehen sein, welches im Zusammenwirken mit einer Axialverschiebung des Döppers einen Teil der Energie des Longitudinalsschlags in einen Drehstoss umwandeln, welcher zusammen mit dem restlichen Longitudinalschlag als Torsionsschlag auf das Werkzeug 9 übertragen wird. Das Werkzeug 9 wird in diesem Fall nach jedem Schlag durch die überlagerte Drehbewegung in eine definierte Ausgangslage zur Schlageinleitung zurückgestellt. Dazu ist neben den Hebeln ein Bund zur axialen Begrenzung der Rückstellbewegung vorgesehen. Bei einer weiteren dazu äquivalenten Schlagumformungsvariante erfolgt die Umlenkung der Kraft durch ein Kugelpaar, das zwischen dem Döpper und dem Werkzeug angeordnet ist. Die Umformung eines Teils der Stossenergie des Longitudinalschlags in einen Drehstoss erfolgt durch die gegenseitige Abwälzbewegung der Kugeln. Auch in diesem Fall ist eine axiale Begrenzung für die Rückstellbewegung des Werkzeugs in eine definierte Ausgangstellung für die Schlageinleitung vorgesehen.

Das mit dem Döpper 6 zusammenwirkende Bauteil 7 kann als zweiter Döpper ausgebildet sein und eine Werkzeugaufnahme 8 für das Einsteckende des Werkzeugs 9 aufweisen. Es kann aber auch einstückig mit dem Werkzeug 9 verbunden sein und ein spezielles Einsteckende 7 des Werkzeugs 9 bilden.

Der in Fig. 2 dargestellte Adapter entspricht in der Funktion dem in Fig. 1 dargestellten Ausführungsbeispiel. In diesem Fall sind die Mittel 5 zur Erzeugung des Drillschlags als Adapter ausgebildet, der in die Werkzeugaufnahme 8 eines Hammerbohrgerätes mit Longitudinalschlagwerk einspannbar ist. Der Adapter weist ein Gehäuse 12 auf, dessen eines Ende mit einer Werkzeugaufnahme 13 ausgestattet ist und dessen anderes Ende zum Einstecken in die kontinuierlich rotierbare Werkzeugaufnahme 8 des handhaltbaren Hammerbohrgerätes ausgebildet ist. Insbesondere ist die Schnittstelle zum Hammerbohrgerät als Einsteckende ausgebildet und weist Drehmitnahmenuten und längliche Nuten zur axialen Fixierung und Sicherung des Adapters 5 in der Werkzeugaufnahme 8 auf. Die miteinander zusammenwirkende Kulissen 10, 11 und/oder Mitnahmeflächen, mit denen ein Teil der Stossenergie der Longitudinalschläge in einen Drehstoss umwandelbar ist, sind innerhalb des Gehäuses 12 angeordnet. Gemäss dem dargestellten Ausführungsbeispiel sind die miteinander zusammenwirkenden Kulissen 10, 11 an dem stabförmigen Schnittstellenelement 14 zum Hammerbohrgerät und am Einsteckende des Werkzeugs 9 angeordnet.

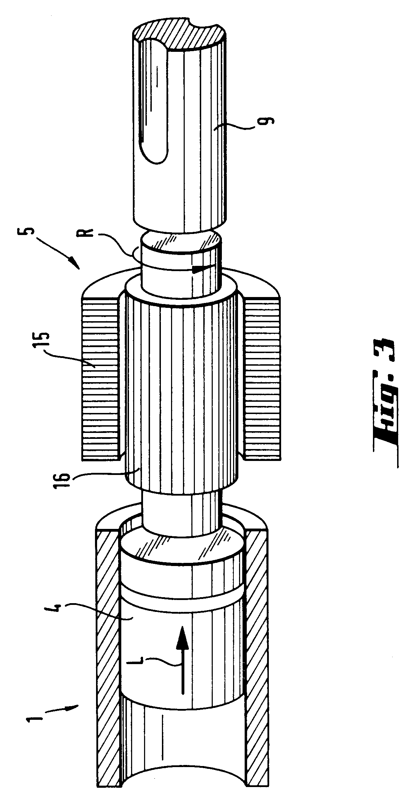

Bei dem in Fig. 3 dargestellten Ausführungsbeispiel der Erfindung ist der Döpper als Rotor 16 eines Motors ausgebildet, der zwischen den longitudinalen Stössen durch den Flugkolben 4 im Feld eines Stators 15 zur Rotation gebracht wird. In der Darstellung ist die longitudinale Bewegung des Flugkolbens 4 durch den Pfeil L und die Rotationsbewegung des Döppers 16 durch den Pfeil R symbolisiert. Beim Longitudinalstoss L durch den Flugkolben 4 wird der rotierende Döpper 16 mit grosser Kraft gegen das Einsteckende des in die Werkzeugaufnahme eingespannten Werkzeugs 9 gepresst. Die Kontaktflächen sind beispielsweise mit formschlüssigen Einrichtungen versehen oder weisen einen hohen Reibungskoeffizienten auf. Dadurch wird der rotierende Döpper beim Kontakt mit dem Einsteckende des Werkzeugs stossartig blockiert. Dies bewirkt, dass am Einsteckende des Werkzeugs 9 gleichzeitig mit der Einleitung der longitudinalen Stosswelle eine Torsionswelle induziert wird. Die von den als Motor 15, 16 ausgebildeten Mitteln 5 zur Erzeugung eines Drillschlags zusätzlich eingebrachte Drehenergie wird vom rotierenden Döpper 16 in einen Drehstoss umgewandelt. Für eine Drillschlagenergie von etwa 3 Ws je Schlag beträgt die erforderliche Motorleistung des zusätzlichen Elektromotors beispielsweise etwa 130 Watt. In einer alternativen Ausführungsvariante kann anstelle des Döppers der Flugkolben nicht nur longitidinal sondern auch rotatorisch beschleunigt werden. In einer vom Grundkonzept des elektropneumatischen Schlagwerks zur Erzeugung des Longitudinalschlags abweichenden Variante können die Längs- und die Drehbeschleunigung des Flugkolbens mit derselben Statorwicklung erfolgen. In diesem Fall ist der Flugkolben selbst der Generator des longitudinalen und des torsionalen Stosses, welche zu einem Drillschlag überlagert werden, der mit oder ohne Döpper auf das Werkzeug 9 übertragen wird.

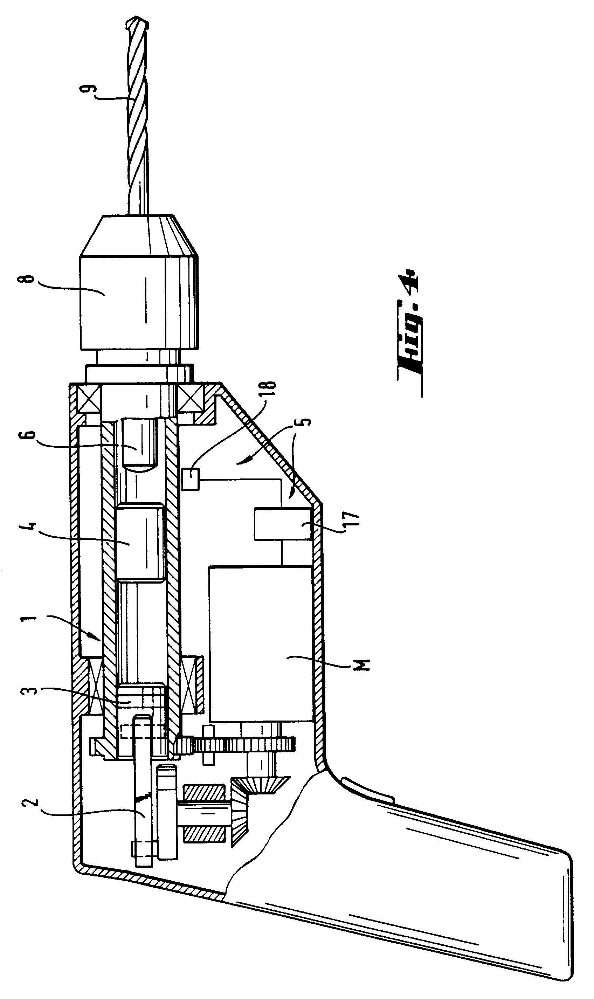

Das in Fig. 4 dargestellte Ausführungsbeispiel des erfindungsgemässen Hammerbohrgerätes weist innerhalb des Gerätegehäuses einen motorisch angetriebenen Schlagmechanismus 1 für die Erzeugung von Longitudinalstössen auf. Ein Motor M treibt eine Exzenterscheibe 2, die mit einem Erregerkolben 3 verbunden ist, der in einer zylindrischen Kolbenführung periodisch axial verschiebbar ist. Der Erregerkolben 3 beschleunigt einen Flugkolben 4, der axial auf das rückwärtige Ende eines Döppers 6 schlägt. Auf diese Weise werden auf ein in einer kontinuierlich rotierbaren Werkzeugaufnahme 8 eingespanntes Werkzeug 9 longitudinale Stösse übertragen. Soweit entspricht das Gerät den bekannten Hammerbohrgeräten mit elektropneumatischem Schlagwerk zur Stosserzeugung. Gemäss der Erfindung ist das Gerät zusätzlich mit Mitteln 5 zur Erzeugung eines Drillschlags ausgestattet. Diese umfassen einen Regelmechanismus 17, mit dem der kontinuierlichen Rotation der Werkzeugaufnahme 8 Drehmomentspitzen überlagerbar sind. Im Berührungsbereich zwischen dem Flugkolben 4 und dem Döpper 6 sind Sensoren 18 vorgesehen, mit denen die Übertragung von Longitudinalschlägen an das Werkzeug überwachbar ist. In einer alternativen Ausführungsvariante wird der Schlagzeitpunkt mit Näherungssensoren durch Überwachung der Bewegung der Exzenterscheibe 2 detektiert. Die Information über den Schlagzeitpunkt wird an den Regelmechanismus 17, der eine Auswerteelektronik umfasst, weitergeleitet. Der Regelmechanismus 17 gibt an die Ansteuerelektronik des Antriebsmotors M einen Tastimpuls weiter. Dadurch gibt die Ansteuerelektronik des Antriebsmotors M einen Stromimpuls ab, der über den Feldmagneten des Motors M ein zusätzliches impulsartiges Drehmoment immer jeweils dann erzeugt, wenn ein Longitudinalschlag an das Werkzeug 9 übertragen wird. Auf diese Weise wird dem vom Schlagmechanismus 1 erzeugten Longitudinalschlag ein Drehmoment überlagert, welches in einem Drillschlag an der Spitze des mit dem Untergrund in Eingriff stehenden Werkzeugs 9 resultiert.

Die erfindungsgemässe Ausbildung des Handgeräts zur abtragenden Bearbeitung von spröden und/oder duktil versagenden Materialien wurde jeweils anhand des Beispiels eines Hammerbohrgeräts mit einem Schlagmechanismus zur Erzeugung von longitudinalen Schlägen, insbesondere mit einem elektropneumatischen Longitudinalschlagwerk, erläutert. Es versteht sich jedoch, dass das Prinzip der Umwandlung eines Teils der Stossenergie auch auf Basis eines Torsionsschlagwerkes funktioniert. So wie die Stossenergie des Longitudinalschlags teilweise in eine Torsionsschlagkomponente umwandelbar ist, kann auch die Stossenergie eines Torsionsschlages teilweise in eine Longitudinalschlagkomponente umgeformt werden. In völlig analoger Weise umfassen die Mittel zu Erzeugung des Drillschlags auch in diesem Fall vorzugsweise miteinander zusammenwirkende Kulissen und/oder Mitnahmeflächen. Die auf diese Weise erzeugten Schlagkomponenten werden wiederum zu einem Drillschlag überlagert, der sowohl eine meisselnde als auch eine abscherende Bearbeitung des Untergrunds bewirkt.

Durch den Drillschlag können mineralische Untergründe grosser Härte und armierter Beton sehr effizient abgebaut werden. Bei Armierungstreffern muss der Bohrvorgang nicht mehr abgebrochen werden und an anderer Stelle des Bauteils von neuem versucht werden. Teilweise oder volle Armierungstreffer resultieren auch nicht mehr in überraschenden Drehmomentspitzen, da der Armierungstahl durch Scherung abgebaut wird.

**Patentansprüche**

1. Handgerät zur abtragenden Bearbeitung von spröden und/oder duktil versagenden Materialien, insbesondere handhaltbares Hammerbohrgerät mit einer kontinuierlich um seine Längsachse rotierbaren Werkzeugaufnahme (8) und einem motorisch betätigbaren Schlagmechanismus (1), mit dem im Betrieb impulsartige Schläge erzeugbar und auf ein in der Werkzeugaufnahme (8) eingespanntes Werkzeug (9) übertragbar sind, **dadurch gekennzeichnet**, dass Mittel (5) vorgesehen sind, mit welchen impulsartige Drillschläge erzeugbar sind, wobei eine longitudinale Schlagkomponente und eine Torsionsschlagkomponente zu einem Drillschlag überlagert sind, welcher auf das in der Werkzeugaufnahme (8) eingespannte, kontinuierlich rotierende Werkzeug (9) übertragbar ist, und eine der Schlagkomponenten vom Schlagmechanismus geliefert wird.

2. Vorrichtung gemäss Anspruch 1, dadurch gekennzeichnet, dass der Drillschlag eine Stossenergie aufweist, welche sich aus einer Drehstossenergie der Torsionsschlagkomponente und aus einer Longitudinalstossenergie der longitudinalen Schlagkomponente zusammensetzt und dass gilt

$$0,02 < E_t/E_l \cdot D < 0,5,$$

wobei $E_t$ für die Drehstossenergie und $E_l$ für die Longitudinalstossenergie steht und D, gemessen in mm, den Durchmesser des in die Werkzeugaufnahme eingespannten Werkzeugs (9) bezeichnet.

3. Vorrichtung gemäss Anspruch 1 oder 2, dadurch gekennzeichnet, dass der motorisch betätigbare Schlagmechanismus (1) zur Erzeugung von Longitudinalschlägen ausgebildet ist und dass mit Hilfe der Mittel (5) zur Erzeugung von Drillschlägen die Torsionsschlagkomponente durch vorzugsweise mechanische Umwandlung eines Teils der Stossenergie der Longitudinalschläge erzeugbar ist.

4. Vorrichtung nach Anspruch 3, dadurch gekennzeichnet, dass die Mittel (5) zur Erzeugung der Drillschläge miteinander zusammenwirkende Kulissen (10, 11) und/oder Mitnahmeflächen umfassen, mit denen ein Teil der Stossenergie der Longitudinalschläge in einen Drehstoss umwandeibar ist, weicher als Torsionsschlagkomponente der longitudinalen Schlagkomponente überlagerbar ist.

5. Vorrichtung nach Anspruch 4, dadurch gekennzeichnet, dass die Mittel (5) zur Erzeugung der Drillschläge innerhalb des Gerätegehäuses angeordnet sind.

6. Vorrichtung nach Anspruch 1, dadurch gekennzeichnet, dass der Schlagmechanismus (1) zur Erzeugung von Longitudinalschlägen ausgebildet ist und dass die Mittel (5) zur Erzeugung von Drillschlägen zwischen dem Schlagmechanismus (1) und der Werkzeugaufnahme (8) angeordnet sind und einen im Feld eines Stators (15) mit regelbarer Umdrehungsgeschwindigkeit rotierbaren Rotor (16) umfassen, der von einem Flugkolben (4) des Schlagmechanimus (1) mit longitudinalen Schlägen beaufschlagt wird und die Longitudinalschläge zusammen mit einem aus seiner Eigenrotation resultierenden Drehmoment an das Werkzeug (9) überträgt.

7. Vorrichtung nach Anspruch 1, dadurch gekennzeichnet, dass der Schlagmechanismus (1) zur Erzeugung von Longitudinalschlägen ausgebildet ist und dass die Mittel (5) zur Erzeugung von Drillschlägen einen Regelmechanismus (17) umfassen, mit dem der kontinuierlichen rotierenden Werkzeugaufnahme (8) Drehmomentspitzen überlagerbar sind.

8. Vorrichtung nach Anspruch 7, dadurch gekennzeichnet, dass Sensoren (18) vorgesehen sind, mit denen die Übertragung von Longitudinalschlägen an das Werkzeug (9) überwachbar ist und der Regelmechanismus (17) derart steuerbar ist, dass die Drehmomentspitzen immer jeweils dann überlagert werden, wenn ein Longitudinalschlag an das Werkzeug (9) übertragen wird.

## Claims

1. Hand tool for a process of removing brittle and/or ductile failing materials, in particular a handheld percussion drilling machine with a tool chuck (8) which continuously rotates around its longitudinal axis and a motor operated percussion mechanism (1) by means of which pulsed percussions are generated and transferred to a tool (9) which is clamped into the tool chuck (8) whilst operative, **characterised in that** means (5) are provided by means of which pulsed drill thrusts are generated, and a longitudinal thrust component and a torsional thrust component can be superposed to generate a drill thrust which can be transferred to the tool (9) which is clamped into the tool chuck (8) and continuously rotates, and one of the percussion components is delivered by the percussion mechanism,

2. Device according to Claim 1, **characterised in that** the drill thrust has a collision energy which is composed of a rotary collision energy of the torsional thrust component and a longitudinal collision energy of the longitudinal thrust component, and

$$0.02 < E_t/E_l \times D < 0.5$$

where $E_t$ represents the rotary collision energy and $E_l$ represents the longitudinal thrust energy and D, measured in mm, represents the diameter of the tool (9) which is clamped into the tool chuck.

3. Device according to Claim 1 or 2, **characterised in that** the motor driven percussion mechanism (1) is designed to generate longitudinal thrusts and that the torsional thrust component is generated with the aid of means (5) for generating drill thrusts by preferably mechanical conversion of a portion of the collision energy.

4. Device according to Claim 3, **characterised in that** the means (5) for generating the drill thrusts include co-operating links (10, 11) and/or pickup surfaces by means of which a portion of the thrust energy of the longitudinal thrusts can be converted into a rotary thrust which as a torsional thrust component can be superposed onto the longitudinal percussion component.

5. Device according to Claim 4, **characterised in that** the means (5) for generating the drill thrusts are arranged within the apparatus housing.

6. Device according to Claim 1, **characterised in that** the thrust mechanism (1) is designed to generate longitudinal thrusts, and that the means (5) for generating drill thrusts are arranged between the thrust mechanism (1) and the tool chuck (8) and include a rotor (16), which is at a controlled speed rotated in the field of a stator (15) and loaded with longitudinal thrusts by a fly piston (4) of the thrust mechanism (1) and transfers the longitudinal thrusts together with a torque, which results from its own rotation, to the tool (9).

7. Device according to Claim 1, **characterised in that** the thrust mechanism (1) is designed to generate longitudinal thrusts, and that the means (5) for generating drill thrusts include a control mechanism (17) by means of which torque peaks can be superposed on the continuously rotating tool chuck (8).

8. Device according to Claim 7, **characterised in that** sensors (18) are provided by means of which the transfer of longitudinal thrusts onto the tool (9) can be monitored and the control mechanism (17) is controlled in such a manner that the torque peaks are always superposed when a longitudinal thrust is transferred to the tool (9).

## Revendications

1. Appareil portatif pour travailler par enlèvement sur des matériaux cassants et/ou à rupture ductile, en particulier marteau perforateur manuel comprenant un mandrin d'outil (8) tournant en continu autour de son axe longitudinal et un mécanisme de percussion (1) qui est actionné par un moteur et qui permet de produire des coups par impulsions lors du fonctionnement et de les transmettre à un outil (9) immobilisé dans le mandrin d'outil (8), caractérisé en ce qu'il est prévu des moyens (5) permettant de produire des percussions par impulsions en torsion, une composante de percussion longitudinale et une composante de percussion en torsion étant superposées pour engendrer une percussion en torsion qui peut être transmise à l'outil (9) tournant en continu immobilisé dans le mandrin d'outil (8), et l'une des composantes de percussion étant fournie par le mécanisme de percussion.

2. Dispositif selon la revendication 1, caractérisé en ce que la percussion en torsion possède une énergie de percussion qui se compose d'une énergie de percussion en rotation de la composante de percussion en torsion et d'une énergie de percussion longitudinale de la composante de percussion longitudinale, à savoir

$$0,02 < E_t/E_l \cdot D < 0,5,$$

$E_t$ correspondant à l'énergie de percussion en rotation et $E_l$ à l'énergie de percussion longitudinale et D, mesuré en mm, désignant le diamètre de l'outil (9) immobilisé dans le mandrin d'outil.

3. Dispositif selon la revendication 1 ou 2, caractérisé en ce que le mécanisme de percussion (1) actionné par un moteur est conçu pour délivrer des coups longitudinaux, et en ce que, à l'aide des moyens (5) permettant de produire des percussions en torsion, la composante de percussion en torsion peut être produite par une conversion, de préférence mécanique, d'une partie de l'énergie de percussion des coups longitudinaux.

4. Dispositif selon la revendication 3, caractérisé en ce que les moyens (5) permettant de produire les percussions en torsion comprennent des coulisses (10, 11) et/ou des surfaces d'entraînement qui coopèrent entre elles et permettent de convertir une partie de l'énergie de percussion des coups longitudinaux en une percussion en rotation qui se superpose à la composante de percussion longitudinale à titre de composante de percussion en torsion.

5. Dispositif selon la revendication 4, caractérisé en ce que les moyens (5) permettant de produire les percussions en torsion sont disposés à l'intérieur d'un boîtier d'appareil.

6. Dispositif selon la revendication 1, caractérisé en ce que le mécanisme de percussion (1) est conçu pour produire des coups longitudinaux, et en ce que les moyens (5) permettant de produire des percussions en torsion sont disposés entre le mécanisme de percussion (1) et le mandrin d'outil (8) et comprennent un induit (16) qui tourne dans le champ d'un stator (15) à une vitesse de rotation réglable et qui est soumis à des coups longitudinaux par un piston volant (4) du mécanisme de percussion (1) et transmet les coups longitudinaux à l'outil (9) conjointement avec un couple de rotation résultant de sa rotation propre.

7. Dispositif selon la revendication 1, caractérisé en ce que le mécanisme de percussion (1) est conçu pour produire des coups longitudinaux, et en ce que les moyens (5) permettant de produire des percussions en torsion comprennent un mécanisme de régulation (17) pour superposer des pics de couple de rotation au mandrin d'outil (8) tournant en continu.

8. Dispositif selon la revendication 7, caractérisé en ce qu'il est prévu des capteurs (18) permettant de surveiller la transmission de coups longitudinaux à l'outil (9) et de commander le mécanisme de régulation (17), de façon que les pics de couple de rotation ne soient superposés que si un coup longitudinal est transmis à l'outil (9).

Fig. 1

**Fig. 2**

**Fig. 3**

Fig. 4